(19) Europäisches Patentamt
European Patent Office
Office européen des brevets

(11) **EP 3 626 976 B1**

(12) **EUROPÄISCHE PATENTSCHRIFT**

(45) Veröffentlichungstag und Bekanntmachung des Hinweises auf die Patenterteilung:
**27.10.2021 Patentblatt 2021/43**

(51) Int Cl.:
**F15B 5/00** *(2006.01)* **F16K 31/06** *(2006.01)*
**F15B 13/043** *(2006.01)*

(21) Anmeldenummer: **19197850.1**

(22) Anmeldetag: **17.09.2019**

(54) **ELEKTRISCH-PNEUMATISCHER UMFORMER, VERWENDUNG EINES ELEKTRISCH-PNEUMATISCHEN UMFORMERS, STELLUNGSREGLER SOWIE STEUERUNGSGERÄT**

ELECTRIC PNEUMATIC CONVERTER, USE OF AN ELECTRIC PNEUMATIC CONVERTER, POSITION CONTROLLER AND CONTROL DEVICE

CONVERTISSEUR ÉLECTRIQUE-PNEUMATIQUE, UTILISATION D'UN CONVERTISSEUR ÉLECTRIQUE-PNEUMATIQUE, RÉGULATEUR DE POSITIONNEMENT ET APPAREIL DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2018 DE 102018123166**

(43) Veröffentlichungstag der Anmeldung:
**25.03.2020 Patentblatt 2020/13**

(73) Patentinhaber: **Samson Aktiengesellschaft 60314 Frankfurt am Main (DE)**

(72) Erfinder:
• **Tietz, Sebastian 55131 Mainz (DE)**

• **Mellinger, Christian 63179 Obertshausen (DE)**
• **Kolbenschlag, Stefan 64291 Darmstadt (DE)**

(74) Vertreter: **Köllner, Malte et al Köllner & Partner mbB Patentanwälte Vogelweidstraße 8 60596 Frankfurt am Main (DE)**

(56) Entgegenhaltungen:
**DE-C1- 10 243 880     DE-C1- 19 818 336**

**Beschreibung**

Gebiet der Erfindung

Die Erfindung betrifft einen elektrisch-pneumatischen Umformer bzw. Wandler nach dem Düse-Prallplatte-Prinzip. Derartige Umformer, die ein magnetisches Prinzip verwenden, sind aufgrund ihrer besonderen Robustheit weit verbreitet und werden z.B. zur Ansteuerung von Stellungsreglern bei pneumatisch angetriebenen Stellventilen verwendet.

Bei einem solchen Umformer bzw. Wandler wird eine Prallplatte mittels eines elektromagnetischen Wandlersystems bewegt. Über den Wandlerstrom kann die Öffnung der Auslassdüse vor der Prallplatte beliebig gesteuert werden. Über eine Vordrossel wird das System mit einem konstanten Vordruck $P_v$ versorgt. Zwischen Vordrossel und Auslassdüse wird der Wandlerausgangsdruck $P_a$ abgegriffen. Mit diesem können beliebige Verbrauchersysteme, z.B. Luftleistungsverstärker für elektropneumatische Stellungsregler, angesteuert werden. Der Ausgangsdruck kann durch das Verstellen der Prallplatte und damit die Steuerung des Luftstroms durch die Auslassdüse eingestellt werden.

Damit der Ausgangsdruck $P_a$ den vollen Wert des Vordruckes $P_v$ erreicht, muss die Auslassdüse durch die Prallplatte abgeschlossen werden, Dies lässt sich nur erreichen, wenn der Düsenmund der Auslassdüse und die Prallplatte in dem entsprechenden Bereich plan zueinander ausgerichtet sind und zudem eine sehr geringe Oberflächenrauigkeit aufweisen.

Für die optimale Funktion des Wandlers ist eine dicht schließende Prallplatte nicht erforderlich oder anzustreben. Die Prallplatte soll die Düse nie vollständig verschließen, um trotz der Hysterese-behafteten Kennlinie eine sichere Regelung zu ermöglichen.

Stand der Technik

Elektrisch-pneumatische Umformer bzw. Wandler nach dem Düse-Prallplatte-Prinzip werden beispielsweise in der Druckschrift DE 198 18 336 C1, die durch Bezugnahme in diese Beschreibung integriert wird, detailliert beschrieben. Die elektrisch-pneumatischen Umformer nach DE 198 18 336 C1 zeichnen sich dadurch aus, dass sie nicht nur schalten (binär, ein/aus), sondern den Ausgangsdruck kontinuierlich (analog) verändern können, also regelbar sind.

Bei Ausgangsdrücken $P_a$ nahe dem Vordruck $P_v$, wenn also der Arbeitsluftspalt zwischen Düse und Prallplatte besonders klein ist, treten bei derartigen elektrisch-pneumatischen Umformern Bernoulli-Effekte auf: Die schnell und im Wesentlichen laminar strömende Luft, die zwischen Düse und Prallplatte entweicht, führt zu einem Unterdruck und dadurch, aufgrund der aus dem Unterdruck resultierenden Kraft, potentiell zum Kleben der Prallplatte an der Düse. Die Größe dieser Andruckkraft ist abhängig von der Geschwindigkeit der Luft und der überströmten Fläche des Düsenrandes. Bei gegebener Geometrie bestimmt der Vordruck die Geschwindigkeit der Luft. Kommt es zu diesem "Kleben" der Prallplatte, leidet die dynamische Regelbarkeit des Systems, insbesondere bei Ausgangsdrücken, die nahe am Vordruck liegen.

Ein Pneumatikventil nach dem Düse-Prallplatte-Prinzip, aber mit mehreren Ventilkanälen und Piezo-Antrieb, ist in der Druckschrift DE 102 43 880 C1 dargestellt.

Aufgabe

Aufgabe der Erfindung ist es, einen elektrisch-pneumatischen Umformer bzw. Wandler anzugeben, der insbesondere bei Ausgangsdrücken nahe dem Vordruck besser regelbar ist.

Lösung

Diese Aufgabe wird durch den Gegenstand des unabhängigen Anspruchs gelöst. Vorteilhafte Weiterbildungen des Gegenstands des unabhängigen Anspruchs sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Zur Lösung der Aufgabe wird ein regelbarer elektrisch-pneumatischer Umformer mit den Merkmalen des Patentanspruchs 1 vorgeschlagen. Dieser arbeitet nach dem Düse-Prallplatte-Prinzip, mit einer Spule, einem Magnetjoch, einem als Prallplatte ausgebildeten drehbeweglichen Anker und einer durch die Prallplatte verschließbaren Düse mit einer Düsenöffnung. Es gibt einen Ausgangsdruck $P_a$, Vordruck $P_v$ und Umgebungsdruck $P_u$, wobei der Vordruck $P_v$ über eine Vordrossel versorgt wird und wobei zwischen Vordrossel und Düse der Ausgangsdruck $P_a$ abgegriffen wird. Zwischen der Düsenrandfläche an der Mündungsöffnung der Düse und der Prallplatte ist immer ein Arbeitsluftspalt vorhanden, wobei der Arbeitsluftspalt abhängig von dem resultierenden Drehmoment aufgrund der die Prallplatte abstoßenden pneumatischen Kraft und der den Anker anziehenden magnetischen Kraft einstellbar ist. Die Prallplatte und die Düsenrandfläche sind dabei so gestaltet, dass die Luft zwischen ihnen turbulent strömt, wenn die Düsenöffnung durch die Prallplatte bis auf einen Spalt verschlossen ist, der weniger als 30 $\mu$m breit ist. Dabei sind der Vordruck $P_v$ und der Umgebungsdruck $P_u$ konstant, und der Ausgangsdruck $P_a$ wird geregelt. Die Breite $s$ des Randes der Düse ist proportional zu der Summe der Rautiefen $Rz_P$ der Oberfläche der Prallplatte im Bereich der Düsenöffnung und $Rz_D$ der Oberfläche des Randes der Düse. Deshalb lässt sich zwischen der Breite $s$ des Randes der Düse und der Summe der Rautiefen $Rz_P$ der Oberfläche der Prallplatte im Bereich der Düsenöffnung und $Rz_D$ der Oberfläche des Randes der Düse ein Proportionalitätsfaktor definieren. Ein guter Kompromiss zwischen dem Vermeiden der genannten Bernoulli-Effekte und der ebenfalls gewünschten Dichtheit des Systems bei geschlossener Prallplatte wird erreicht, wenn der Proportionalitätsfaktor $K = s / (Rz_P + Rz_D)$ einen Wert zwischen 10 und 28 aufweist, bevorzugt zwischen 15 und 20. Besonders bevorzugt wird $K = 16$. Der Durchmesser der Bohrung der Düse wird dabei als vorgegeben betrachtet und nicht variiert.

Bei vorgegebenen Vordruck $P_V$ sowie Umgebungsdruck $P_U$ und vorgegebener Geometrie ist dieser Proportionalitätsfaktor ein Maß dafür, ob die Luft zwischen Düsenrand und Prallplatte laminar oder turbulent strömt. Das nachteilige "Kleben" der Prallplatte tritt nur bei laminarer Luftströmung auf. Bei turbulenter Strömung hingegen treten, bedingt durch die Verwirbelung senkrecht zur Hauptströmungsrichtung der Luft, Kräfte auf, die den Unterdruck der strömenden Luft kompensieren.

Allgemein herrscht das Vorurteil, dass in dem engen Arbeitsluftspalt eines Düse-Prallplatte-Systems die Oberflächen möglichst glatt sein müssen, um einen störungsfreien Luftstrom zu erhalten. Dahinter steht die Tatsache, dass die zum Durchströmen des Spaltes notwendige Druckdifferenz mit zunehmender Oberflächenrauheit stark ansteigt. Dies führt intuitiv zur Bevorzugung möglichst glatter Flächen am Spalt. Es hat sich jedoch überraschend herausgestellt, dass eine definierte Rauheit der Prallplattenoberfläche und/oder der gegenüberliegenden Oberfläche des Düsenrandes vorteilhaft zur Reduzierung von Bernoulli-Effekten ist, insbesondere, wenn eine schmalere Gestaltung des Düsenrandes mit einer entsprechenden Rauheit der Prallplattenoberfläche kombiniert wird. Hierbei wird durch die gegenüber einer glatten Platte erhöhte Rautiefe vor allem die Ausbildung einer laminaren Strömung verhindert. Die Strömung der entweichenden Restluft ist nun eher turbulent, was Bernoulli-Kräften entgegenwirkt. Durch eine Verringerung der Breite des Düsenrandes wird auch der Luftströmweg im Bereich der Drosselstelle verringert, so dass sich die Strömungsgeschwindigkeit der entweichenden Luft schnell verringert. Im Ergebnis sollte die Oberflächenrautiefe proportional umso größer sein, je breiter der Rand der Düse ist. So kann die positive Wirkung einer erhöhten Rautiefe dem negativen Einfluss eines breiteren Düsenmundrandes entgegenwirken.

Ein solcherart konfigurierter elektrisch-pneumatischer Umformer ist aufgrund der stark reduzierten Bernoulli-Kräfte zwischen der Prallplatte und dem Düsenmund auch bei relativ hohen Ausgangsdrücken, die nahe am Vordruck liegen, sehr gut dynamisch regelbar. Die Prallplatte neigt dabei nicht zum Kleben an der Düsenöffnung.

Vorzugsweise weist die Prallplatte im Bereich der Düsenöffnung eine Oberflächenrautiefe $Rz_P$ von 2-4 μm auf. Der gegenüberliegende Rand der Düse sollte dann eine deutlich geringere Oberflächenrautiefe haben. Dies kann auch umgekehrt verwirklicht sein, so dass die Düsenrandfläche eine bevorzugte Oberflächenrautiefe $Rz_D$ von 2-4 μm aufweist. In diesem Fall sollte die Prallplatte im Bereich der Düsenöffnung eine deutlich geringere Oberflächenrautiefe aufweisen. Entsprechend ist es vorteilhaft, wenn die Breite s des Randes der Düse 40-56 μm beträgt.

Die bevorzugte Oberflächenrautiefe der Prallplatte und/oder der Düse lässt sich besonders leicht erreichen, wenn die Prallplatte und/oder die Düse mittels MIM-Verfahren (*"Metal Injection Molding"*) hergestellt wird. Dies hat bei hohen Stückzahlen den zusätzlichen Vorteil erheblicher Einsparungen an Produktionskosten.

Vorzugsweise weist das Material der Prallplatte und/oder der Düse eine Korngröße von 5-20 μm auf. Dadurch wird sichergestellt, dass mittels MIM hergestellte Teile eine Oberflächenrautiefe von ungefähr 5 μm erreichen können.

Bei Prallplatten und/oder Düsen, die mittels MIM hergestellt wurden, ist es außerdem von Vorteil, wenn diese mittels Gleitschleifen (auch als Trovalisieren bezeichnet) nachbehandelt werden. Dadurch kann eine geringfügig zu hohe Oberflächenrautiefe von typischerweise 5 μm auf den bevorzugten Wertebereich verringert werden. Es ist einfacher und kostengünstiger, eine Rautiefe zu vermindern, als eine Rauheit zu erhöhen.

Eine weniger bevorzugte Ausführungsform des regelbaren elektrisch-pneumatischen Umformers weist eine Prallplatte auf, die aus Blech besteht. In diesem Fall ist es vorteilhaft, wenn die Rautiefe der Prallplatte durch mindestens ein abtragendes Verfahren und/oder mindestens ein umformendes Verfahren erhöht wurde.

Prallplatten aus Blech (z.B. Permenorm oder Mumetall) sind, bedingt durch die üblichen Herstellungsverfahren, typischerweise glatt, d.h. weisen eine Rautiefe von ungefähr 1 μm auf. Mit Hilfe abtragender bzw. umformender Verfahren, wie z.B. Schleif- oder Ätzprozessen oder z.B. prägen, kann die weiter oben angegebene bevorzugte Rautiefe erreicht werden.

Zur weiteren Lösung der Aufgabe kann ein elektrisch-pneumatischer Umformer, wie er beschrieben wurde, vorzugsweise in einem Stellungsregler für ein pneumatisch angetriebenes Stellventil verwendet werden.

Solche Umformer werden häufig in einem Regelkreis für einen Ausgangsdruck $P_a$ eingesetzt. Eine weitere Anwendungsform ist, solche Umformer zum Steuern des Ausgangsdrucks zu nutzen, wobei z.B. der Vordruck $P_V$ als Stellgröße genutzt wird.

Die Aufgabe wird außerdem gelöst durch einen Stellungsregler für ein pneumatisch angetriebenes Stellventil mit einem elektrisch-pneumatischen Umformer, wie er weiter oben beschrieben wurde, sowie durch ein Steuerungsgerät für ein solches Stellventil, ebenfalls mit einem elektrisch-pneumatischen Umformer, wie er weiter oben beschrieben wurde.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Ein Ausführungsbeispiel ist in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig.1 eine schematische Darstellung des typischen Aufbaus eines regelbaren elektrisch-pneumatischen Umformers nach dem Düse-Prallplatte-Prinzip (Stand der Technik);

Fig.2 eine schematische Darstellung des Auftretens von Bernoulli-Kräften bei einem Düse-Prallplatte-System eines regelbaren elektrisch-pneumatischen Umformers gemäß dem Stand der Technik;

Fig. 3A eine schematische Darstellung einer Düse-Prallplatte-Anordnung eines erfindungsgemäßen regelbaren elektrisch-pneumatischen Umformers;

Fig. 3B einen vergrößerten Ausschnitt aus Fig. 3A;

Fig. 4 eine Kennlinie eines erfindungsgemäßen IP-Wandlers;

Fig. 5A ein Diagramm für den Hub der Prallplatte über der Zeit eines Regelvorganges;

Fig. 5B ein Diagramm für den sich einstellenden Ausgangsdruck Pa über der Zeit eines Regelvorganges; und

Fig. 5C ein Diagramm für den Massendurchfluss durch Vordrossel und Auslassdüse über der Zeit eines Regelvorganges.

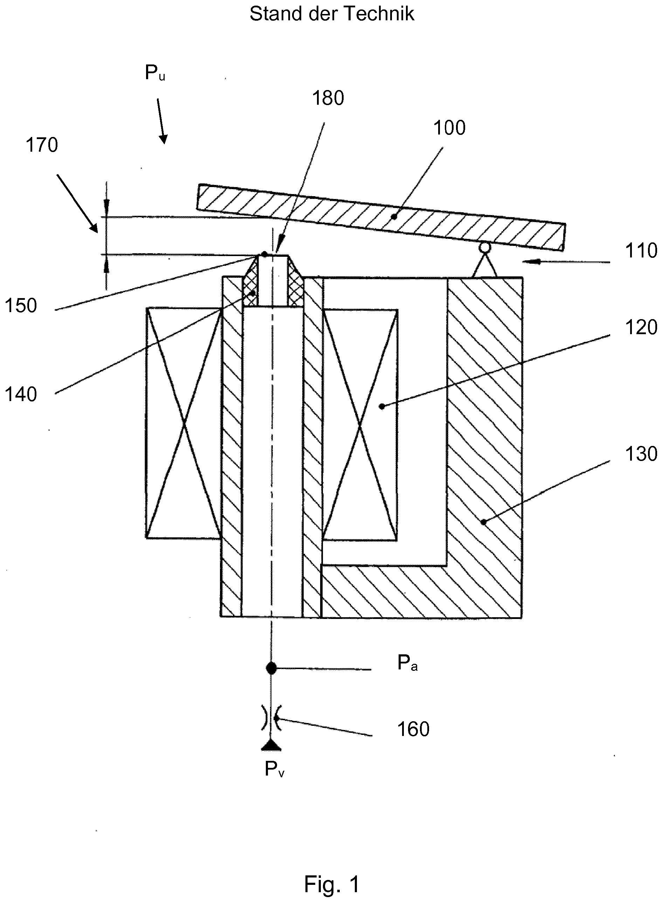

Fig. 1 zeigt den typischen Aufbau und die grundlegende Funktionsweise eines regelbaren elektrisch-pneumatischen Umformers bzw. Wandlers nach dem Düse-Prallplatte-System. Die Prallplatte 100 besteht aus einem weichmagnetischen Stoff, typischerweise einer Nickel-EisenLegierung (z.B. Permenorm oder Mumetall), ist an ihrem einen Ende 110 drehbar gelagert und wird über ein elektromagnetisches Wandlersystem mit einer Spule 120 und einem Joch 130 bewegt. Über den Wandlerstrom kann die Öffnung 180 der Auslassdüse 140 beliebig gesteuert werden. Dies geschieht dadurch, dass ein Drehmomentgleichgewicht eingestellt wird. Das durch die anziehende Kraft des Wandlers 120, 130 verursachte Drehmoment entspricht hierbei dem durch die gegen die Prallplatte 100 strömende Druckluft verursachten Drehmoment. Über eine Vordrossel 160 wird das System mit einem konstanten Vordruck $P_v$ versorgt. Zwischen Vordrossel 160 und Auslassdüse 140 wird der Wandlerausgangsdruck $P_a$ abgegriffen. Mit diesem können beliebige Verbrauchersysteme wie z.B. Luftleistungsverstärker für elektropneumatische Stellungsregler angesteuert werden. Der Ausgangsdruck $P_a$ kann durch das Verstellen der Prallplatte 100 und des Luftstromes stetig eingestellt werden. Wichtig ist hierfür, dass die Form der Auslassdüse 140, ihr Rand 150 und der Arbeitsluftspalt 170 zwischen Prallplatte 100 und Auslassdüse 140, 150 aufeinander abgestimmt sind. Dies ist z.B. in DE 198 18 336 C1 detailliert beschrieben.

Damit der Ausgangsdruck $P_a$ den vollen Wert des Vordruckes $P_v$ erreicht, muss die Auslassdüse 140, 150 durch die Prallplatte 100 komplett dicht abgeschlossen werden. Dies lässt sich nur erreichen, wenn der Düsenmund 150 der Auslassdüse 140 und die Prallplatte 100 in dem entsprechenden Bereich plan zueinander ausgerichtet sind und zudem eine sehr geringe Oberflächenrauigkeit aufweisen. Dieser Zustand lässt sich jedoch in der Praxis mit einfachen Mitteln nicht erreichen. Eine geringe Restströmung bleibt stets erhalten.

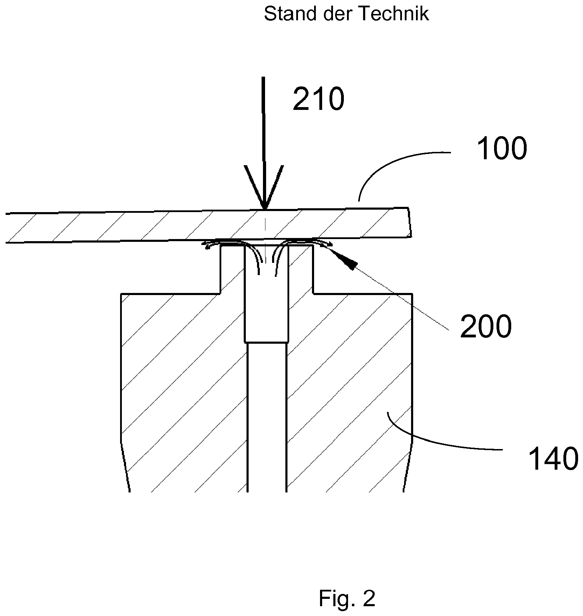

In Fig. 2 sind die negativen Auswirkungen dieser Restströmung bei einem Düse-Prallplatte-System nach dem Stand der Technik dargestellt. In Situationen, in denen die Auslassdüse 140 durch die Prallplatte 100 fast vollständig verschlossen ist, wenn also ein Ausgangsdruck eingestellt werden soll, der nahe dem Vordruck liegt, entsteht zwischen dem Rand der Düsenöffnung und der glatten Prallplatte 100 eine Engstelle. Die Restströmung 200, die hier auftritt, ist schnell und hat weitestgehend laminaren Charakter. Deshalb treten Bernoulli-Kräfte 210 auf, die die Prallplatte 100 gegen die Auslassdüse 140 ziehen. Infolge dessen schließt die Prallplatte schneller und öffnet langsamer, als gewünscht ist. Sie neigt also zum "Kleben".

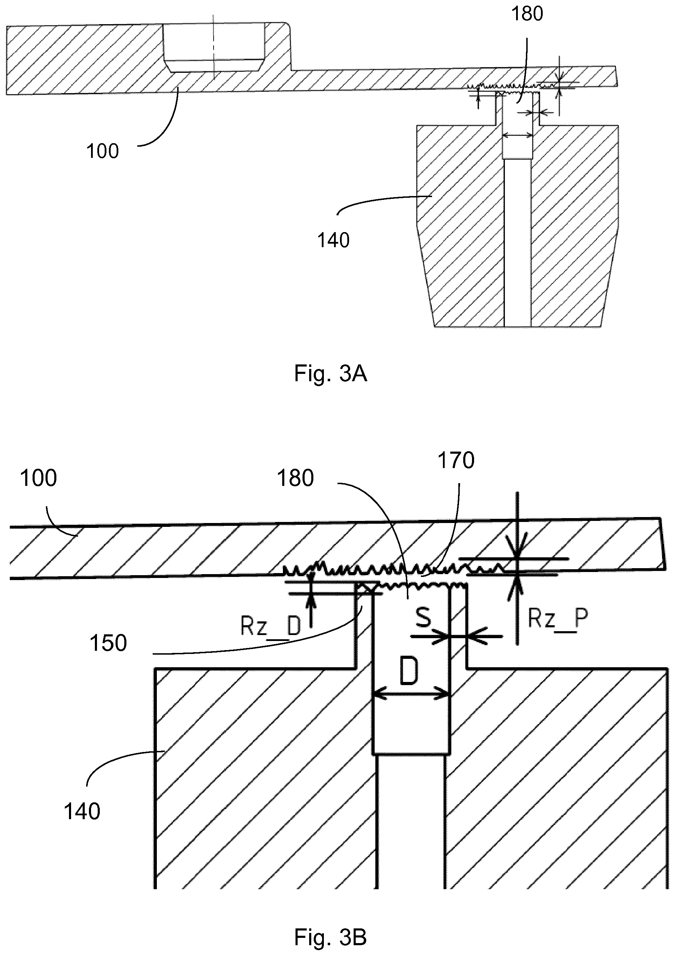

Bei einem erfindungsgemäßen regelbaren elektrisch-pneumatischen Umformer, wie in Fig. 3A und Fig. 3B dargestellt, ist die Breite s des Düsenrandes 150 reduziert. Zudem ist die Rautiefe $Rz_P$ der Prallplatte 100 erhöht. Alternativ oder zusätzlich kann die Rautiefe $Rz_D$ des Düsenmundes 150 erhöht sein. Hierbei wird, bedingt durch die gegenüber einer glatten Prallplatte 100 erhöhte Rautiefe, vor allem die Ausbildung einer laminaren Strömung verhindert. Die Strömung der zwischen Prallplatte 100 und Auslassdüse 140 entweichenden Restluft 170 ist nun eher turbulent, was dem Auftreten von Bernoulli-Kräften entgegenwirkt. Durch die verringerte Breite s des Düsenmundrandes 150 ist zudem die Engstelle verkürzt, so dass die Luft nach Überwinden dieser kürzeren Strecke ihre Strömungsgeschwindigkeit wieder vermindert.

Es zeigt sich, dass die Oberflächenrautiefe Rz der Prallplatte 100 und/oder des Düsenmundrandes 150 umso größer sein sollte, je breiter der Rand s der Düsenöffnung 150 ist. Dadurch kann die positive Wirkung einer erhöhten Rautiefe dem negativen Einfluss eines breiten Düsenmundrandes entgegenwirken.

Für den optimalen Wert lässt sich als Kennzahl die Proportionalitätskonstante K angeben, welche bei konstantem Durchmesser der Auslassdüsenbohrung D aus dem Quotienten aus der Breite s des Düsenrandes und der Rautiefe Rz der korrespondierenden Prallplattenoberfläche 100 (und/oder der Oberfläche des Düsenmundrandes) berechnet wird:

$$K = s / Rz$$

Bezeichnet man die Rautiefe der Prallplattenoberfläche mit $Rz_P$ und die Rautiefe der Oberfläche des Randes der Auslassdüse mit $Rz_D$, so gilt:

$$K = s / (Rz_P + Rz_D)$$

In einem typischen Anwendungsfall liegt die Breite des Düsenrandes bei s = 48 $\mu$m für eine Auslassdüse 140 mit einem Bohrungsdurchmesser von D = 0,9 mm. Der Düsenrand ist typischerweise glatt ausgeführt. Eine optimale Rautiefe der Oberfläche der Prallplatte 100 liegt in diesem Fall bei Rz = 3 $\mu$m.

Ein optimaler Wert für die Proportionalitätskonstante K liegt bei

$$K_{opt} = 48 / 3 = 16.$$

Es hat sich gezeigt, dass sinnvolle Werte für K im Bereich von 10 bis 28 liegen. Bei Düsenrandbreiten von beispielsweise zwischen 40 und 56 $\mu$m ergeben sich so sinnvolle Rautiefen zwischen 2 und 4 $\mu$m.

Derartige Oberflächenrautiefen lassen sich zweckmäßigerweise dadurch erreichen, dass die relevanten Teile, also typischerweise die Prallplatte 100, mittels MIM-Verfahren hergestellt werden. Derart hergestellte Prallplatten, die z.B. aus dem Grundstoff Catamold FN50 (BASF) oder einem ähnlichen weichmagnetischen Nickel-Eisen-Granulat hergestellt werden können, zeigen typischerweise nach der Produktion eine Oberflächenrautiefe von etwa 5 $\mu$m. Diese liegt für optimale Eigenschaften des Düse-Prallplatte-Systems etwas zu hoch. Durch nachträgliches Gleitschleifen (sog. Trovalisieren) können jedoch die gewünschten Werte kostengünstig erreicht werden.

Bei Verwendung von Prallplatten aus glattem Blech (weichmagnetisches Nickel-Eisen, z.B. Permenorm oder Mumetall) liegt die herstellungsbedingte Oberflächenrautiefe bei lediglich etwa 1 $\mu$m. In so einem Fall kann jedoch die gewünschte Rautiefe mit größerem Aufwand durch abtragende Verfahren wie z.B. Schleifoder Ätzprozesse oder durch umformende Verfahren, wie z.B. Prägen, nachträglich erzeugt werden.

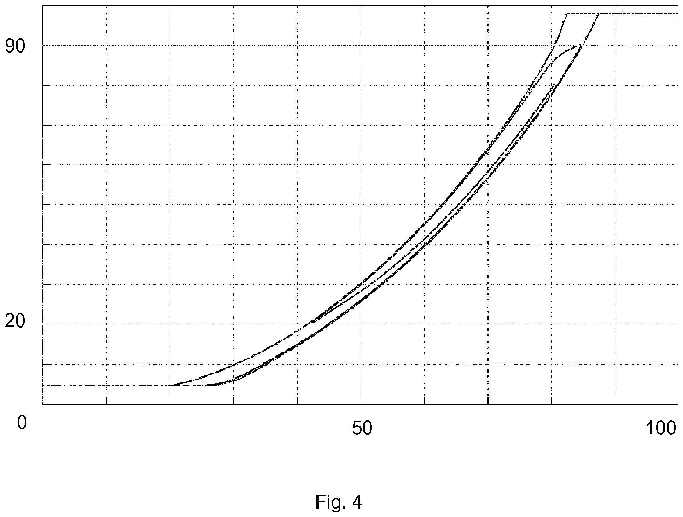

In Fig. 4 ist die Kennlinie eines analogen IP-Wandlers nach dem beschriebenen Düse-Prallplatte-Prinzip dargestellt. Dabei entsprechen die äußeren Linien dem sog. Großsignalbetrieb und die inneren Linien dem Kleinsignalbetrieb. Auf der X-Achse ist der Wandlerstrom in % aufgetragen (100% entspricht typischerweise 1,7 mA) und auf der Y-Achse der Ausgangsdruck $P_a$, ebenfalls in % (100% entspricht typischerweise 1,8 bar).

Die dargestellte Kennlinie ist typisch für einen IP-Wandler mit $P_V$=1,80 bar, einem Vordrosseldurchmesser von 0,2 mm und einem Ausgangsdüsendurchmesser D von 0,9 mm. Der volle Druck $P_a$ = 1,80 bar wird als Ausgangsdruck nicht komplett erreicht, da die Prallplatte die Düse in der Praxis nie vollständig verschließt. Dies ist der Grund für eine Restluftströmung und - bei IP-Wandlern nach dem Stand der Technik - Bernoulli-Effekte.

Die Kennlinie zeigt eine deutliche Hysterese. Die Ursache dafür ist vor allem die Hysterese der Magnetisierungskennlinie des weichmagnetischen Materials, aus dem Prallplatte und Joch (einschließlich der Düse) bestehen.

Vorzugsweise werden die beschriebenen IP-Wandler in elektropneumatischen Stellungsreglern verwendet. In einem solchen Fall wird der Ausgangsdruck $P_a$ der Eingangskammer eines pneumatischen Luftleistungsverstärkers zugeführt. Der Luftleistungsverstärker wird mit Druckluft (üblicherweise 6 bar) versorgt. Dessen Feder-Membransystem ist so ausgelegt, dass er zum vollständigen Durchsteuern (d.h. 6 bar am Ausgang) von den theoretisch erreichbaren 1,8 bar am Eingang nur 1,6 bar benötigt. Beim Unterschreiten von 0,4 bar wird der Ausgangsdruck hinter dem Luftleistungsverstärker Null, was durch eine Offsetfeder erreicht wird. Die Arbeitsbereichsgrenzen $P_a\_u$ (0,4 bar, 20%) und $P_a\_o$ (1,6 bar, 90%) sind in dem Diagramm kenntlich gemacht.

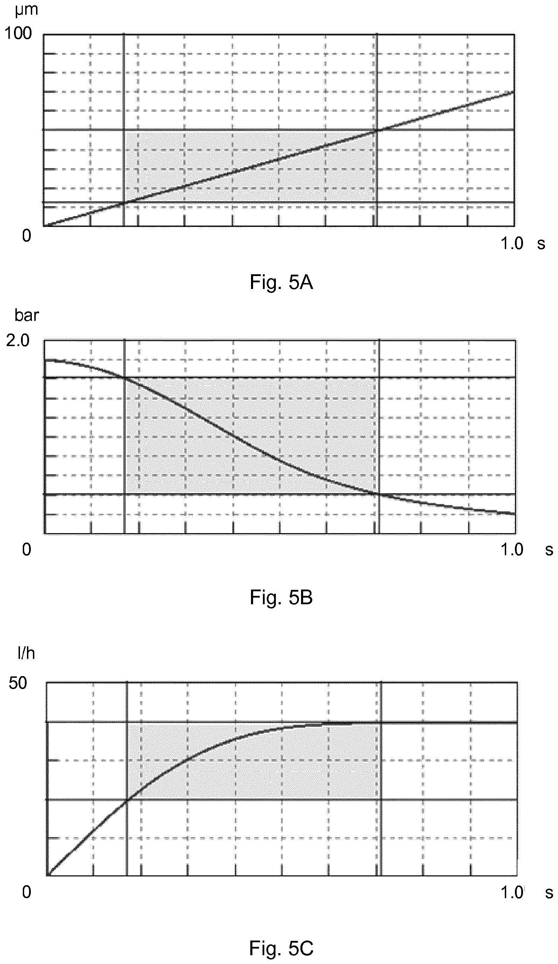

In Fig. 5A ist der Hub der Prallplatte, in Fig. 5B der sich einstellende Ausgangsdruck $P_a$ und in Fig. 5C der Massendurchfluss durch Vordrossel und Auslassdüse für einen typischen Zeitabschnitt dargestellt. Wie man erkennt, beträgt der nötige Prallplattenhub, um $P_a$ von 1,6 bar auf 0,4 bar umzusteuern (in allen Figuren durch Linien bzw. ein Rechteck innerhalb des Graphen gekennzeichnet), lediglich ca. 40 $\mu$m. Oberhalb von 1,6 bar am Ausgang wird der Massendurchfluss mit < 20 l/h sehr gering. Der Bereich kurz vorher ist der Bereich, in dem ggf. Bernoulli-Kräfte auftreten, die das Wandlersystem in seiner dynamischen Regelbarkeit stören.

Glossar

Elektrisch-pneumatischer Umformer nach dem Düse-Prallplatte-Prinzip

Ein solcher Umformer bzw. Wandler weist eine Spule 120, ein Magnetjoch 130 und einen als Prallplatte 100 ausgebildeten drehbeweglichen Anker auf. Durch die Prallplatte 100 kann eine Auslassdüse 140, 150 verschlossen und wieder freigegeben werden, wobei dies abhängig von dem resultierenden Drehmoment aufgrund der die Prallplatte 100 abstoßenden pneumatischen Kraft und der den Anker anziehenden magnetischen Kraft geschieht. Das System wird zudem mit Druckluft mit dem Vordruck $P_V$ versorgt. Durch das Öffnen bzw. Verschließen der Auslassdüse 140 wird der Ausgangs-

luftdruck $P_a$ eingestellt.

MIM

MIM, auch Metallpulverspritzgießen genannt, steht für *"Metal Injection Moulding"*. Dabei wird feines Metallpulver mit einem organischen Binder vermischt und mittels einer Spritzgussmaschine in Form gebracht. Anschließend wird der Binder wieder entfernt und das Bauteil bei hoher Temperatur in einem Ofen gesintert. Als Ergebnis erhält man ein rein metallisches Enderzeugnis, das die mechanischen Vorteile gesinterter Bauteile mit der großen Formgebungsvielfalt des Spritzgießens verbindet. Metallspritzgießen ist ein wirtschaftliches Fertigungsverfahren für Großserienprodukte, das vor allem bei der Herstellung kleinerer bis mittelgroßer Bauteile mit eher komplexer Geometrie und einem Gewicht von 0,1 bis etwa 150 Gramm zur Anwendung kommt (z.B. Brillenscharniere). Ein wesentlicher Vorteil dieses Verfahrens ist, dass Bauteile mit anspruchsvoller Geometrie, die in konventionellen Verfahren nur mehrteilig zu fertigen sind, in einem einzigen Stück hergestellt werden können.

Rauheit, Rautiefe

Rauheitskenngrößen und Vorgehensweisen zu ihrer Messung und Bewertung sind z.B. in DIN EN ISO 4287:1998 und DIN EN ISO 4288:1998 definiert und geregelt. Die Messung der Oberflächenrauheit erfolgt typischerweise mit einem Tastschnittgerät. Das so erfasste Oberflächenprofil ist z.B. durch den Tastspitzenradius oder die Gleitkufe des Tastsystems gefiltert. Tiefpassfilterung liefert das sog. Primärprofil (die Wellenlänge $\lambda_s$ hierzu ist genormt und im Messgerät üblicherweise voreingestellt). Hochpassfilterung des Primärprofils mit der Grenzwellenlänge Ac, die abhängig von den zu erwartenden Rauheitswerten gewählt wird, ergibt das sog. Rauheitsprofil. Daraus werden die Rauheitskenngrößen über die Messstrecke ln ausgewertet, die i.d.R. aus 5 Einzelmessstrecken lr besteht, wobei lr jeweils der Grenzwellenlänge $\lambda_C$ entspricht. Für jede dieser Einzelmessstrecken kann die größte Höhendifferenz $Rz_i$ des Rauheitsprofils bestimmt werden. Die mittlere Rautiefe Rz ergibt sich dann als Mittelwert der 5 $Rz_i$-Werte.

Turbulente und laminare Strömung

Unter einer turbulenten Strömung wird hier eine Strömung verstanden, bei der die Reynoldszahl größer 2300 ist. Wird der durch den Arbeitsspalt strömenden Luft ein Staub oder Farbstoff beigemischt, wird das Vorliegen einer turbulenten Strömung durch die charakteristischen Wirbel eindeutig erkannt. Laminare Strömung strömt in Schichten, die auch im Übergangsgebiet zwischen unterschiedlichen Strömungsgeschwindigkeiten keine Verwirbelungen zeigen.

Bezugszeichen

| | |
|---|---|
| 100 | Prallplatte |
| 110 | Scharnier oder Lager |
| 120 | Spule |
| 130 | Joch |
| 140 | Auslassdüse |
| 150 | Rand der Auslassdüse |
| 160 | Vordrossel |
| 170 | Arbeitsluftspalt |
| 180 | Öffnung der Auslassdüse |
| 200 | Restströmung |
| 210 | Bernoulli-Kraft |
| D | Innendurchmesser der Düsenöffnung |
| $P_v$ | Vordruck |
| $P_a$ | Ausgangsdruck |
| $P_u$ | Umgebungsdruck |
| Rz | Rautiefe (allgemein) |
| $Rz_P$, Rz_P | Rautiefe der Prallplatte |
| $Rz_D$, Rz_D | Rautiefe der Düsenrandoberfläche |
| s | Breite des Düsenrandes |

zitierte Literatur

zitierte Patentliteratur

DE 198 18 336 C1
DE 102 43 880 C1

zitierte Nicht-Patentliteratur

DIN EN ISO 4287:1998
DIN EN ISO 4288:1998

**Patentansprüche**

1. Elektrisch-pneumatischer Umformer mit einer Prallplatte (100), einer durch die Prallplatte (100) ganz oder teilweise verschließbaren Düse (140, 150) mit einer Düsenöffnung (180) und mit einem Ausgangsdruck $P_a$, Vordruck $P_v$ und Umgebungsdruck $P_u$, wobei der Vordruck $P_v$ über eine Vordrossel (160) versorgt wird, wobei zwischen Vordrossel (160) und Düse (140, 150) der Ausgangsdruck $P_a$ abgegriffen wird,
**dadurch gekennzeichnet,**

1.1 dass die Luft zwischen der Prallplatte (100) und der Düsenrandfläche (150) turbulent strömt,
1.2 wenn die Düsenöffnung (180) durch die Prallplatte (100) bis auf einen Spalt (170) verschlossen ist, wobei der Spalt (170) weniger als 30 $\mu$m breit ist;

1.3 dass der Vordruck $P_v$ und der Umgebungsdruck $P_u$ konstant sind und der Ausgangsdruck $P_a$ geregelt wird; und

1.4 dass die Breite s des Randes (150) der Düse (140) proportional zu der Summe der Rautiefen $Rz_P$ der Oberfläche der Prallplatte (100) im Bereich der Düsenöffnung (180) und $Rz_D$ der Oberfläche des Randes (150) der Düse (140) ist;

1.4.1 wobei der Proportionalitätsfaktor

$$K = s / (Rz_P + Rz_D)$$

einen Wert zwischen 10 und 28 aufweist.

2. Elektrisch-pneumatischer Umformer nach dem vorhergehenden Anspruch,
   **dadurch gekennzeichnet,**
   **dass** der Proportionalitätsfaktor K einen Wert zwischen 15 und 20 einschließlich hat.

3. Elektrisch-pneumatischer Umformer nach dem vorhergehenden Anspruch,
   **dadurch gekennzeichnet,**
   **dass** der Proportionalitätsfaktor den Wert K = 16 hat.

4. Elektrisch-pneumatischer Umformer nach einem der vorhergehenden Ansprüche,
   **dadurch gekennzeichnet,**
   **dass** die Prallplatte (100) im Bereich der Düsenöffnung (180) und/oder die Düsenrandfläche (150) eine Oberflächenrautiefe Rz von 2 - 4 $\mu$m aufweist.

5. Elektrisch-pneumatischer Umformer nach einem der vorhergehenden Ansprüche,
   **dadurch gekennzeichnet,**
   **dass** die Breite s des Randes (150) der Düse (140) 40-56 $\mu$m beträgt.

6. Elektrisch-pneumatischer Umformer nach einem der vorhergehenden Ansprüche, **dadurch gekennzeichnet,**
   **dass** die Prallplatte (100) und/oder die Düse (140, 150) mittels Metal Injection Moulding-Verfahren hergestellt wurde.

7. Elektrisch-pneumatischer Umformer nach dem vorhergehenden Anspruch, **dadurch gekennzeichnet,**
   **dass** das Material der Prallplatte (100) und/oder der Düse (140, 150) eine Korngröße von 5-20 $\mu$m aufweist.

8. Elektrisch-pneumatischer Umformer nach einem der beiden vorhergehenden Ansprüche, **dadurch gekennzeichnet,**
   **dass** die Prallplatte (100) und/oder die Düse (140, 150) mittels Gleitschleifen behandelt wurde.

9. Elektrisch-pneumatischer Umformer nach einem der Ansprüche 1 bis 5,
   **dadurch gekennzeichnet,**

   **dass** die Prallplatte (100) aus Blech besteht; wobei die Rautiefe durch mindestens ein abtragendes Verfahren und/oder mindestens ein umformendes Verfahren erhöht wurde.

10. Verwendung eines elektrisch-pneumatischen Umformers nach einem der vorhergehenden Ansprüche in einem Stellungsregler für ein pneumatisch angetriebenes Stellventil.

11. Stellungsregler für ein pneumatisch angetriebenes Stellventil mit einem elektrisch-pneumatischen Umformer nach einem der vorhergehenden Ansprüche.

12. Steuerungsgerät für ein pneumatisch angetriebenes Stellventil mit einem elektrisch-pneumatischen Umformer nach einem der vorhergehenden Ansprüche.

**Claims**

1. Electro-pneumatic converter having a baffle plate (100), an exhaust nozzle (140, 150) completely or partially closable by said baffle plate (100) with an exhaust nozzle aperture (180) and an output pressure $P_a$, initial pressure $P_v$ and ambient pressure $P_u$, wherein the initial pressure $P_v$ is supplied by an inlet throttle (160), wherein the output pressure $P_a$ is tapped between the inlet throttle (160) and the exhaust nozzle (140, 150),
   **characterized in that**

   1.1 the air flows turbulently between the baffle plate (100) and the exhaust nozzle edge surface (150),

   1.2 when the exhaust nozzle aperture (180) is closed by the baffle plate (100) except for a gap (170), wherein the gap (170) is less than 30 $\mu$m wide;

   1.3 the initial pressure $P_v$ and the ambient pressure $P_u$ are constant and the output pressure $P_a$ is regulated; and

   1.4 the width s of the edge (150) of the exhaust nozzle (140) is proportional to the sum of the roughness depths $Rz_P$ of the surface of the baffle plate (100) in the area of the exhaust nozzle aperture (180) and $Rz_D$ of the surface of the edge (150) of the exhaust nozzle (140);

   1.4.1 wherein the proportionality factor

$$K = s / (Rz_P + Rz_D)$$

has a value between 10 and 28.

**2.** Electro-pneumatic converter according to the preceding claim,
**characterized in that**
the proportionality factor K has a value between 15 and 20, inclusive.

**3.** Electro-pneumatic converter according to the preceding claim,
**characterized in that**
the proportionality factor has the value K = 16.

**4.** Electro-pneumatic converter according to one of the preceding claims,
**characterized in that**
the baffle plate (100) has a roughness depth Rz of 2-4 $\mu$m in the area of the aperture of the exhaust nozzle (180) and/or the edge of the exhaust nozzle (150).

**5.** Electro-pneumatic converter according to one of the preceding claims,
**characterized in that**
the width s of the edge (150) of the exhaust nozzle (140) is 40-56 $\mu$m.

**6.** Electro-pneumatic converter according to one of the preceding claims,
**characterized in that**
the baffle plate (100) and/or the exhaust nozzle (140, 150) were produced by an Metal Injection Moulding process.

**7.** Electro-pneumatic converter according to the preceding claim,
**characterized in that**
the material of the baffle plate (100) and/or the exhaust nozzle (140, 150) has a grain size of 5-20 $\mu$m.

**8.** Electro-pneumatic converter according to one of the two preceding claims,
**characterized in that**
the baffle plate (100) and/or the exhaust nozzle (140, 150) were treated by vibratory finishing.

**9.** Electro-pneumatic converter according to one of claims 1 to 5,
**characterized in that**

the baffle plate (100) consists of sheet metal; wherein the roughness depth was increased by at least one ablative process and/or at least one forming process.

**10.** Use of an electro-pneumatic converter according to one of the preceding claims in a positioner for a pneumatically actuated control valve.

**11.** Positioner for a pneumatically actuated control valve having an electro-pneumatic converter according to one of the preceding claims.

**12.** Control unit for a pneumatically actuated control valve having an electro-pneumatic converter according to one of the preceding claims.

**Revendications**

**1.** Convertisseur électropneumatique avec un clapet (100), une buse (140, 150) pouvant être fermée complètement ou partiellement par le clapet (100) et présentant une ouverture de buse (180), et avec une pression de sortie $P_a$, une pression d'entrée $P_v$ et une pression ambiante $P_u$, la pression d'entrée $P_v$ étant alimentée par un étranglement d'entrée (160), la pression de sortie $P_a$ étant prélevée entre l'étranglement d'entrée (160) et la buse (140, 150),
**caractérisé en ce**

1.1 que l'air s'écoule de manière turbulente entre le clapet (100) et la surface du bord de la buse (150),
1.2 lorsque l'ouverture de la buse (180) est fermée par le clapet (100) à l'exception d'une fente (170), la fente (170) ayant une largeur inférieure à 30 $\mu$m ;
1.3 que la pression d'entrée $P_v$ et la pression ambiante $P_u$ sont constantes et que la pression de sortie $P_a$ est contrôlée ; et
1.4 que la largeur s du bord (150) de la buse (140) est proportionnelle à la somme des profondeurs de rugosité $Rz_P$ de la surface du clapet (100) dans la région de l'ouverture de la buse (180) et $Rz_D$ de la surface du bord (150) de la buse (140) ;
1.4.1 le facteur de proportionnalité

$$K = s / (Rz_P + Rz_D)$$

ayant une valeur comprise entre 10 et 28.

**2.** Convertisseur électropneumatique selon la revendication précédente,
**caractérisé en ce**
**que** le facteur de proportionnalité K a une valeur comprise entre 15 et 20 inclus.

**3.** Convertisseur électropneumatique selon la revendication précédente,
**caractérisé en ce**
**que** le facteur de proportionnalité a la valeur K = 16.

**4.** Convertisseur électropneumatique selon l'une des revendications précédentes,
**caractérisé en ce**

**que** le clapet (100) présente dans la zone de l'ouverture de buse (180) et/ou de la surface de bord de buse (150) une profondeur de rugosité de surface Rz de 2 - 4 $\mu$m.

5.  Convertisseur électropneumatique selon l'une des revendications précédentes,
    **caractérisé en ce**
    **que** la largeur s du bord (150) de la buse (140) est de 40-56 $\mu$m.

6.  Convertisseur électropneumatique selon l'une des revendications précédentes,
    **caractérisé en ce**
    **que** le clapet (100) et/ou la buse (140, 150) ont été fabriqués au moyen d'un moulage par injection de métal.

7.  Convertisseur électropneumatique selon la revendication précédente,
    **caractérisé en ce**
    **que** le matériau du clapet (100) et/ou de la buse (140, 150) a une taille de grain de 5-20 $\mu$m.

8.  Convertisseur électropneumatique selon l'une ou l'autre des deux revendications précédentes,
    **caractérisé en ce**
    **que** le clapet (100) et/ou la buse (140, 150) ont été traités au moyen d'un affûtage de surface de glissement.

9.  Convertisseur électropneumatique selon l'une des revendications 1 à 5,
    **caractérisé en ce**

    **que** le clapet (100) est réalisé en tôle ;
    dans laquelle la profondeur de rugosité a été augmentée par au moins un processus d'enlèvement et/ou au moins un processus de remodelage.

10. Utilisation d'un convertisseur électropneumatique selon l'une des revendications précédentes dans un positionneur pour une vanne de régulation à commande pneumatique.

11. Positionneur pour vanne de régulation à commande pneumatique comprenant un convertisseur électropneumatique selon l'une des revendications précédentes.

12. Dispositif de commande d'une vanne de régulation à commande pneumatique comprenant un convertisseur électropneumatique selon l'une des revendications précédentes.

Stand der Technik

$P_u$

170

180

100

110

150

120

140

130

$P_a$

160

$P_v$

Fig. 1

Stand der Technik

Fig. 2

Fig. 3A

Fig. 3B

Fig. 4

Fig. 5A

Fig. 5B

Fig. 5C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19818336 C1

- DE 10243880 C1